Europäisches Patentamt

European Patent Office

Office européen des brevets

(19)

(11) Numéro de publication: **0 043 056**
**B1**

(12) **FASCICULE DE BREVET EUROPEEN**

(45) Date de publication du fascicule du brevet: **19.09.84**

(51) Int. Cl.³: **H 04 J 6/02**

(21) Numéro de dépôt: **81104752.1**

(22) Date de dépôt: **22.06.81**

(54) Procédé de détection de parole dans un signal de circuit téléphonique et détecteur de parole le mettant en oeuvre.

(30) Priorité: **27.06.80 FR 8014400**

(43) Date de publication de la demande:
**06.01.82 Bulletin 82/01**

(45) Mention de la délivrance du brevet:
**19.09.84 Bulletin 84/38**

(84) Etats contractants désignés:
**DE FR GB NL**

(56) Documents cités:
**FR-A-1 244 664**
**FR-A-2 158 720**
**FR-A-2 266 991**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Lajotte, Dominique**
**24, avenue Pierre Semard**
**F-91700 Ste Genevieve des Bois (FR)**
Inventeur: **Menet, Francis**
**5, avenue du Maréchal Juin**
**F-92100 Boulogne (FR)**

(74) Mandataire: **Weinmiller, Jürgen et al**
**Zeppelinstrasse 63**
**D-8000 München 80 (DE)**

Courier Press, Leamington Spa, England.

## Description

La présente invention est du domaine de la transmission du signal de parole.

La détection de la parole a de nombreuses applications, notamment en téléphonie, pour les concentrateurs. On sait en effet que la durée d'une conversation n'est occupée par de la parole qu'à trente ou quarante pour cent du temps et qu'une manière d'augmenter la capacité d'un système de transmission multi-voie consiste à utiliser les périodes de silence dans les voies existantes pour créer des voies supplémentaires.

Pour détecter la présence ou l'absence de parole sur une voie il est connu d'utiliser un critère de puissance selon lequel tout signal présentant sur un intervalle de temps élémentaire, une puissance moyenne supérieure à un seuil choisi au-dessus du niveau moyen de bruit est considéré comme un signal de parole et le reste comme du silence. Malheureusement l'on se heurte pour la fixation de ce seuil à deux exigences contradictoires: il doit être le plus élevé possible pour avoir une bonne discrimination des silences et le plus bas possible pour éviter un hachage de la parole nuisant à son intelligibilité. Pour concilier ces deux exigences, il est connu de modifier le seuil de puissance utilisé en fonction du niveau moyen du locuteur évalué sur une longue période et de prolonger systématiquement les séquences de paroles détectées d'un délai dénommé "temps de maintien" d'autant plus long que le niveau du locuteur est faible.

Un gros inconvénient de ce critère de puissance est le fait que l'on ne peut pas abaisser suffisamment le seuil de puissance pour permettre la détection des débuts de paroles non voisées correspondant à des consonnes fricatives ou sibilantes sans faire perdre au détecteur l'essentiel de son efficacité. Il en résulte une certaine perte d'intelligibilité des messages. C'est le cas par exemple du mot anglais "seven" qui est souvent transmis comme "even".

Pour détecter la présence ou l'absence de parole sur une voie il est également connu d'utiliser des critères sur les passages par zéro qui, dans le cas d'un signal de parole, contiennent une grande partie de l'information puisque l'intelligibilité d'un tel signal n'est que peu affectée par un écrêtage. Ces critères sur les passages par zéro ne prennent pas en compte la puissance de la séquence du signal analysé mais ses caractéristiques fréquen-cielles. Ils consistent à admettre que ladite séquence est de la parole si la distribution de ses zéros révèle une composante de fréquence d'amplitude maximale dans le haut ou le bas de la bande vocale, la plupart des signaux de paroles ayant un spectre de puissance présentant un maximum décentré par rapport à la bande vocale, vers le bas pour les voyelles et certaines consonnes semi voyelle, nasales, plosives et vers le haut pour les consonnes fricatives ou sibilantes, Ces critères de passage par zéro présentent l'inconvénient d'avoir une efficacité qui dépend dans une large part de propriétés statistiques et fréquentielles du bruit présent dans le signal analysé.

Il est connu de corriger l'insensibilité du critère de puissance aux consonnes fricatives ou sibilantes non voisées en le complétant par un critère sur les passages par zéro et plus exactement en abaissant son seuil lorsque le critère sur les passages par zéro montre que le maximum du spectre de puissance du signal analysé se rapproche du haut de la bande vocale. On peut citer en exemple un détecteur de parole décrit dans le brevet français n° 2.158.720 déposé par la demanderesse. Ce détecteur utilise, comme critère, le débordement à 16 d'une somme algébrique de deux notes attribuées aux échantillons successifs du signal analysé pris à 125 $\mu$s d'intervalle. L'une des notes varie par valeurs entières entre −1 et +2 en fonction de l'amplitude absolue de l'échantillon et traduit, après sommation, la valeur efficace ou la puissance du signal. L'autre note prend la valeur 1 si l'échantillon est supérieur en valeur absolué à un certain seuil et si lui même ainsi que les deux échantillons qui le précèdent ont des signes alternés, et la valeur 0 dans le cas contraire. Sa valeur intégrée sur un certain nombre d'échantillons successifs traduit, compte tenu de la cadence d'échantillonnage, l'importance des fréquences du haut de la bande vocale dans le signal analysé.

La présente invention a pour but un procédé et un dispositif de détection de parole mettant en oeuvre un critère de puissance complété par un critère sur les passages par zéro et présentant une grande efficacité.

Elle a pour objet un procédé de détection de parole consistant à considérer comme un signal de parole toute séquence du signal à analyser présentant une puissance moyenne supérieure à un seuil dont la valeur est choisie d'autant plus faible que le nombre de passages par zéro de ladite séquence se rapproche de 1,25 par milliseconde.

Le signal à analyser est avantageusement partagé en séquences élémentaires de quatre millisecondes.

Selon un mode particulier de mise en oeuvre le seuil peut prendre trois valeurs discrètes: la valeur la plus faible correspondant à un nombre de passages par zéro compris entre 1 et 1,5 par milliseconde, la valeur intermédiaire correspondant à un nombre de passages par zéro compris entre 0 et 1 par milliseconde ou 1,5 et 2,5 par milliseconde et la valeur la plus grande correspondant à un nombre de passages par zéro supérieur à 2,5 par milliseconde.

Après la détection de parole par l'application du critère précédent pendant plusieurs séquences élémentaires successives du signal analysé s'étendant sur une durée au moins égale à un temps dit "temps d'activité préalable" il est prévu un temps dit "temps de maintien" pendant lequel les séquences du signal analysé sont systématiquement considérées comme de la parole.

La valeur la plus faible du seuil peut être éliminée et la valeur intermédiaire étendue à un nombre de passages par zéro compris entre 0 et 2,5 par milliseconde dans le cas où la séquence de signal analysé est précédée d'une séquence dont la puissance moyenne a dépassé un niveau dit "de forte parole" très supérieur aux valeurs discrètes du seuil sans que les puissances moyennes de plusieurs séquences ultérieures consécutives n'aient été inférieures à un niveau dit "de faible parole" choisi entre la valeur inférieure et la valeur intermédiaire du seuil. Dans ce dernier cas il peut être avantageux d'augmenter le nombre de séquences élémentaires successives pendant lesquelles de la parole doit être détectée pour la mise en oeuvre d'un temps de maintien et de raccourcir la durée de ce temps de maintien.

Elle a également pour objet un détecteur de parole recevant en entrée, à intervalle régulier $\tau$ des échantillons numériques avec bit de signe, du signal à analyser et comportant:

— un circuit d'élévation au carré connecté à l'entrée du détecteur,
— un premier accumulateur numérique connecté à la sortie du circuit d'élévation au carré et remis à zéro tous les L échantillons,
— un circuit de détection des variations du bit de signe des échantillons successifs appliqués à l'entrée du détecteur de parole,
— un deuxième accumulateur numérique connecté à la sortie du circuit de détection des variations du bit de signe et remis à zéro tous les L échantillons,
— un banc de premiers comparateurs à seuils, avec des valeurs de seuils ($P_1$, $P_2$, $P_3$) étagées, connectés, en entrée, à la sortie du premier accumulateur numérique, lesdits premiers comparateurs à seuils délivrant chacun en sortie un signal binaire dont l'état indique si le signal de sortie du premier accumulateur numérique est ou non supérieur à son seuil,
— un banc de deuxièmes comparateurs à seuils, avec des valeurs de seuils ($N_1$, $N_2$, $N_3$) étagées bornant des plages contigües dont l'une renferme la valeur 1,25 L$\tau$, $\tau$ étant exprimé en milliseconde, lesdits deuxièmes comparateurs à seuils étant connectés, en entrée, à la sortie du deuxième accumulateur numérique et délivrant en sortie des signaux binaires dont les états sont représentatifs de la plage dans laquelle se trouve le signal de sortie du deuxième accumulateur numérique,
— et un circuit sélecteur connecté, en entrée, aux sorties des premiers et deuxièmes comparateurs à seuil, ledit circuit sélecteur assurant le choix de la sortie de l'un des premiers comparateurs à seuils en fonction des états des sorties des deuxièmes comparateurs à seuils, cela de manière que le seuil du premier comparateur sélectionné soit d'autant plus petit que la plage dans laquelle se trouve le signal de sortie du deuxième accumulateur numérique est plus proche de celle contenant la valeur 1,25 L$\tau$, l'état de sortie du premier comparateur à seuil sélectionné correspondant à un signal de sortie du premier accumulateur numérique supérieur à son seuil étant considéré comme indicatif de parole et l'état complémentaire comme indicatif de silence.

Le détecteur de parole selon l'invention comporte en outre, de manière avantageuse:

— un générateur de délai connecté à la sortie du circuit sélecteur, ledit générateur de délai se déclenchant pour une durée de temps de maintien dès que le signal de sortie du circuit sélecteur passe à l'état correspondant à l'absence de parole après être resté constamment, pendant une durée au moins égale à une durée de temps d'activité préalable, à l'état correspondant à la présence de parole
— et un circuit de maintien commandé par le générateur de délai et connecté en sortie du circuit sélecteur, ledit circuit de maintien délivrant le signal de sortie du détecteur de parole avec un état identique à celui du signal de sortie du circuit sélecteur ou avec un niveau correspondant à la présence de parole selon que le générateur de délai n'est pas déclenché ou est déclenché.

Selon une variante, le détecteur de parole conforme à l'invention peur comporter en outre:

— un banc de troisièmes comparateurs à seuils, au nombre de deux, l'un ayant une valeur de seuil très supérieure à celles des seuils des premiers comparateurs à seuils, l'autre ayant une valeur de seuil comprise entre la valeur la plus faible et celle qui lui est immédiatement supérieure des seuils des premiers comparateurs à seuils,
— un circuit bistable connecté aux sorties des deux troisièmes comparateurs à seuils, ledit circuit bistable étant amené dans un état indicatif d'un niveau fort de parole sur commande du troisième comparateur ayant la valeur de seuil la plus élevée et, dans l'autre état indicatif d'un niveau faible de parole par l'autre troisième comparateur
— et un circuit de blocage incorporé au circuit sélecteur et commandé par le circuit bistable, ledit circuit de blocage empêchant la sélection de celui des premiers comparateurs ayant la valeur de seuil la plus faible dans le cas d'un niveau fort de parole.

D'autres caractéristiques et avantages de l'invention ressortiront des revendications jointes et de la description ci-après d'un mode de réalisation d'un détecteur de parole mettant en oeuvre un procédé de détection conforme à l'invention. Cette description sera faite en regard du dessin dans lequel:

— la figure 1 représente un schéma global d'un détecteur de parole selon l'invention,
— la figure 2 est le schéma détaillé d'un circuit bistable employé dans le détecteur de parole représenté à la figure 1,
— la figure 3 est le schéma détaillé d'un générateur de délai employé dans le détecteur de parole représenté à la figure 1
— et les figures 4A et 4B sont des tables de vérité illustrant le critère utilisé pour la distinction entre la parole et le bruit dans le détecteur de parole représenté à la figure 1.

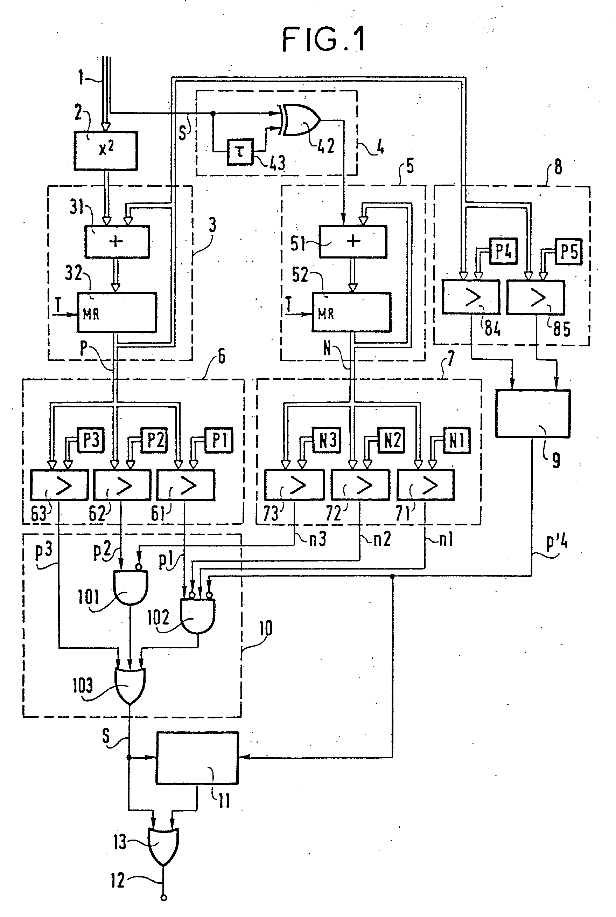

Le détecteur de parole représenté dans la figure 1 est destiné à un signal de parole transmis en MIC sous forme d'échantillons numériques x ($n\tau$) se succédant avec un intervalle de temps $\tau$ de 125 $\mu$s, codés en code compressé à huit bits (sept bits de valeur absolue et un bit de signe) que l'on suppose disponibles en parallèle.

Les sept bits de valeur absolue des échantillons numériques x ($n\tau$) du signal de parole appliqué à l'entrée 1 du détecteur sont dirigés vers un circuit d'élévation au carré 2 réalisé par exemple à l'aide d'une mémoire morte programmable (PROM) puis vers un premier accumulateur numérique 3 où les carrés des valeurs absolues $x^2$ ($n\tau$) des échantillons numériques sont accumulés trente deux fois. Ce premier accumulateur numérique 3 peut être réalisé, comme représenté, à l'aide d'un additionneur numérique 31 suivi d'un registre à décalage 32 à entrées et sorties parallèles bouclé sur lui même par l'intermédiaire de la sortie et d'une entrée de l'additionneur numérique 31 et remis à zéro tous les trente deux échantillons, c'est-à-dire sur une période T de quatre millisecondes. Il délivre en sortie, en fin d'accumulation, un signal P représentatif de la puissance du signal de parole sur la période écoulée de quatre millisecondes.

Le bit de signe S ($x(n\tau)$) des échantillons numériques x ($n\tau$) du signal de parole appliqué à l'entrée 1 du détecteur est dirigé vers un circuit de détection de changement de niveau 4 réalisé, par exemple, à l'aide d'une porte logique 42 de type "ou exclusif" à deux entrées recevant toutes les deux le bit de signe, l'une directement, l'autre par l'intermédiaire d'un circuit à retard 43 introduisant un délai $\tau$ correspondant à l'intervalle de temps séparant deux échantillons successifs. Le signal de sortie du circuit de détection de changement de niveau 4 qui est représentatif des passages par zéro du signal de parole appliqué à l'entrée 1 du détecteur de parole est appliqué à l'entrée d'un deuxième accumulateur numérique 5 où il est accumulé pendant une durée T correspondant à trente deux échantillons numériques du signal de parole. Ce deuxième accumulateur numérique 5 peut avoir le même condition que le premier c'est-à-dire comprendre un additionneur numérique 51 suivi d'un registre à décalage 52 à entrée et sortie parallèles bouclé sur lui-même par l'intermédiaire de la sortie et de l'une des entrées de l'additionneur et remis à zéro sur une période T de quatre millisecondes. Il délivre en sortie, en fin d'accumulation, un signal N représentatif du nombre de passages par zéro du signal de parole sur la période écoulée de quatre millisecondes.

Le signal P, représentatif de la puissance du signal de parole, délivré par le premier accumulateur numérique 3 est appliqué, en entrée, à un banc 6 de trois premiers comparateurs numériques 61, 62, 63 qui le comparent avec trois valeurs de seuils étagées $P_1$ $P_2$ $P_3$ et qui émettent chacun en sortie un signal binaire $p_1$ respectivement $p_2$, $p_3$ à l'état 1 si le signal P est supérieur à leur seuil respectif $P_1$, $P_2$ ou $P_3$ et à l'état 0 dans le cas contraire.

Le seuil $P_3$ est choisi égal à —40 dBmO et correspond au niveau maximal de bruit admis pour une voie téléphonique dans les circuits internationaux. Le seuil $P_2$ est pris égal à —43 dBmO et le seuil $P_1$ à —56 dBmO.

Le signal N, représentatif du nombre de passage par zéro du signal de parole sur quatre millisecondes, délivré par le deuxième accumulateur numérique 5, est appliqué en entrée à un banc 7 de trois deuxièmes comparateurs numériques 71, 72, 73 qui le comparent avec trois valeurs de seuils étagées $N_1$, $N_2$, $N_3$ et qui émettent chacun en sortie un signal binaire $n_1$ respectivement $n_2$, $n_3$ à l'état 1 lorsque le signal N est supérieur à leur seuil respectif $N_1$, $N_2$ ou $N_3$ et à l'état 0 dans le cas contraire.

Le seuil $N_3$ est choisi égal à dix ce qui correspond à 2,5 passages par zéro par milliseconde ou à une fréquence fondamentale de 1250 Hz. Le seuil $N_2$ est choisi égal à six ce qui correspond à 1,5 passages par zéro par milliseconde ou à une fréquence fondamentale de 750 Hz et le seuil $N_1$ égal à quatre ce qui correspond à 1 passage par zéro par milliseconde ou à une fréquence fondamentale de 500 Hz.

Le signal P représentatif de la puissance du signal de parole est également appliqué à l'entrée d'un banc 8 de troisièmes comparateurs 84, 85 qui sont au nombre de deux et qui le comparent avec une valeur de seuil $P_4$ très élevée, correspondant à un niveau fort de parole par exemple —14 dBmO, cette valeur étant choisie en tenant compte du fait que le niveau moyen sur une voie téléphonique est de —15 dBmO, et avec une valeur de seuil $P_5$ comprise entre les seuils $P_1$, $P_2$, des premiers comparateurs 61, 62, par exemple —47 dBmO. Chacun des troisièmes comparateurs 84, 85 délivre en sortie, comme les précédents, un signal binaire à l'état logique 1 si le signal P est supérieur à son seuil et à l'état 0 dans le cas contraire.

Les troisièmes comparateurs 84, 85 sont suivis d'un circuit bistable 9 délivrant un signal binaire de sortie $p'_4$ qui passe à l'état 1 correspondant à un fort niveau de parole dès que le signal P représentatif de la puissance du signal de parole dépasse la valeur de seuil la plus élevée $P_4$ et qui revient à l'état 0 correspondant à un faible niveau de parole si le signal P reste inférieur au seuil $P_5$ pendant un délai de 32 millisecondes ou 8 T.

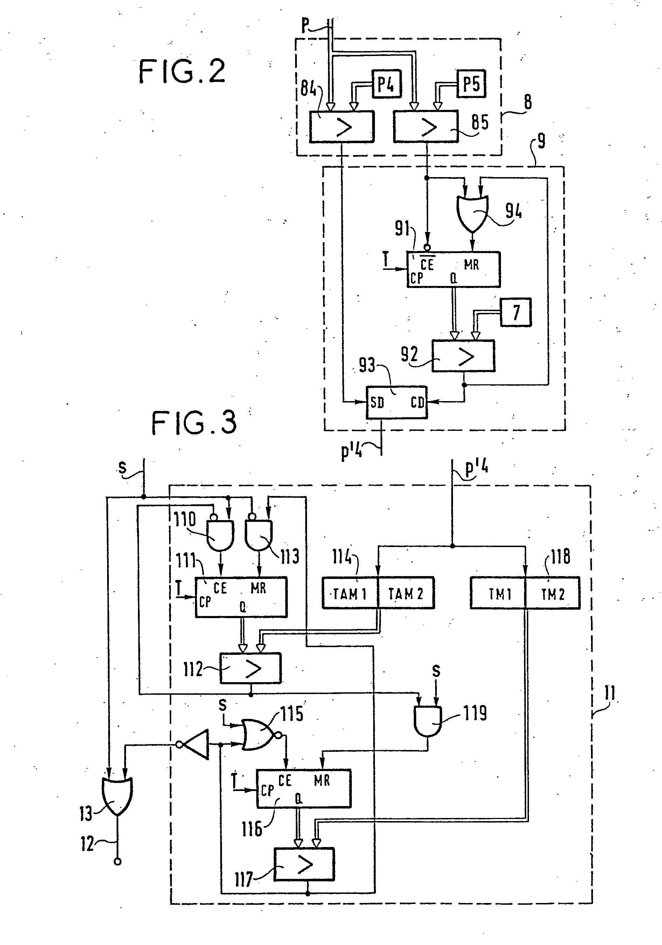

Ce circuit bistable 9 peut comporter, comme représenté sur la figure 2, un compteur 91 suivi d'un comparateur 92 avec une valeur de seuil égale à 7 et une bascule bistable 93. Le compteur 91 comporte une entrée d'horloge CP sur laquelle il reçoit un signal rectangulaire de période T, une entrée complémentée d'autorisation de comptage $\overline{CE}$ connectée à la sortie du troisième comparateur 85 ayant le seuil $P_5$, une entrée de remise à zéro MR connectée à la sortie d'une porte logique 94 de type "ou" à deux entrées connectées l'une à la sortie du troisième comparateur 85 ayant le seuil $P_5$ et l'autre à la sortie du comparateur 92, et une sortie Q à plusieurs digits parallèles. Le comparateur 92 a deux entrées parallèles, l'une connectée à la sortie Q du compteur 91 et l'autre à un registre contenant sous forme binaire le chiffre 7. La bascule bistable 93 a une entrée de remise à "un" SD connectée à la sortie du troisième comparateur 84 ayant le seuil $P_4$ et une entrée de remise à zéro CD connectée à la sortie du comparateur 92.

Un signal P d'un niveau supérieur au seuil $P_4$ provoque l'apparition d'un état logique 1 en sortie du troisième comparateur 84 entraînant le passage à l'état logique 1 de la sortie $p'_4$ de la bascule bistable 93. Il provoque également l'apparition d'un état logique 1 en sortie du troisième comparateur 85 qui bloque à zéro le compteur 91. Un signal P d'un niveau inférieur au seuil $P_5$ provoque l'apparition d'un état logique 0 en sortie du troisième comparateur 85 qui débloque le compteur 91. Si le signal P reste à un niveau inférieur au seuil $P_5$ pendant un moins 32 millisecondes ou 8 périodes T, la sortie Q du compteur 91 dépasse le seuil 7 du comparateur 92 dont la sortie passe à l'état logique 1 entraînant le passage à l'état logique 0 de la sortie $p'_4$ de la bascule bistable 93 et la remise à zéro du compteur 91.

Les sorties des premiers et deuxièmes comparateurs 61, 62, 63, 71, 72, 73 ainsi que celle $p'_4$ du circuit bistable 9 sont connectées aux entrées d'un circuit sélecteur 10 ayant une sortie unique sur laquelle est disponible un signal binaire s dont l'état logique "un" est considéré comme indiquant la présence de parole et l'état zéro comme indiquant la présence d'un silence et qui est défini, en fonction des grandeurs appliquées aux entrées du circuit sélecteur 10, par la relation logique:

$$s = p_3 + p_2 \overline{n_3} + p_1 . \overline{p'_4} . n_1 . \overline{n_2} \qquad (1)$$

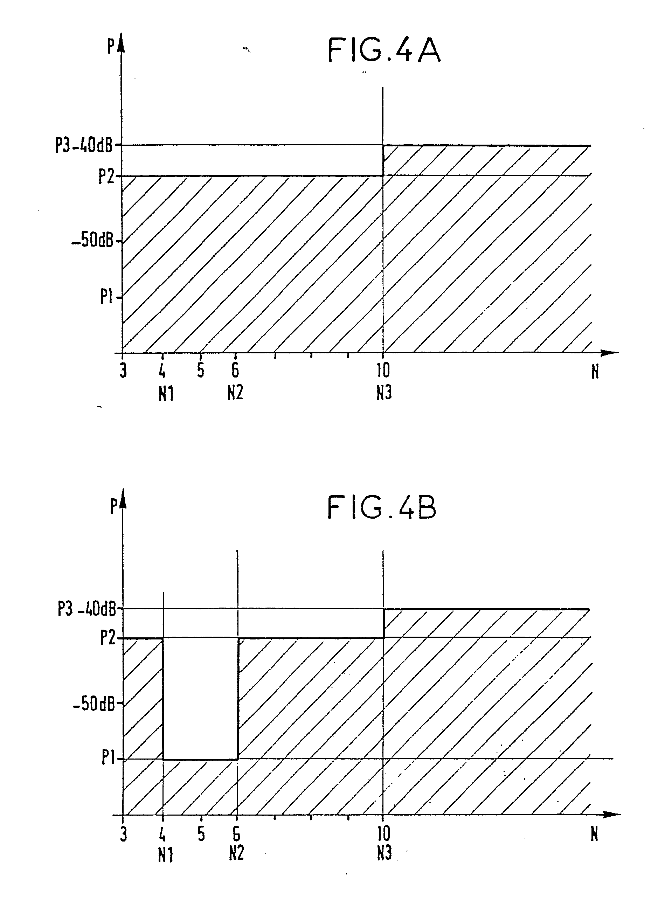

La dépendance qui résulte de la relation précédente, entre l'état logique du signal s de sortie du circuit sélecteur 10 et, la puissance P et le nombre de passages par zéro du signal de parole détermine le critère utilisé pour la détection de parole. Elle apparait plus clairement dans les figures 4A et 4B qui sont des tables de vérité exprimant, conformément à la relation (1), l'état logique du signal s en fonction de la puissance P et du nombre de passages par zéro, N, d'une séquence de quatre millisecondes du signal de paroles l'une (figure 4A) dans le cas où le signal $p'_4$ est au niveau logique 1 c'est-à-dire en cas d'un fort niveau de parole, l'autre (figure 4B) dans le cas où le signal $p'_4$ est au niveau logique 0 c'est-à-dire en cas d'un faible niveau de parole. Dans ces figures 4A et 4B, les cases hachurées sont celles pour lesquelles le signal s est au niveau logique 0 indiquant la détection d'un silence et les autres celles pour lequel ce même signal s est au niveau logique 1 indiquant la détection de parole. Il ressort de ces figures 4A et 4B que le sélecteur 10 assure la sélection de la sortie de l'un des premiers comparateurs 61, 62, 63 en fonction du nombre de passages par zéro, N, que le premier comparateur choisi 61, 62, 63 a un seuil d'autant plus faible que le nombre de passages par zéro, N se rapproche de 5, toutes les quatre millisecondes c'est-à-dire de 1,25 par milliseconde et que la possibilité de choix du premier comparateur 61 ayant le seuil le plus bas est supprimée en cas d'un fort niveau de parole.

Le circuit sélecteur 10 peut être réalisé, comme représenté à la figure 1 à l'aide:

— d'une porte logique 101 de type "et" à deux entrées dont l'une est complémentée et connectée à la sortie de deuxième comparateur 73 ayant le seuil $N_3$ et dont l'autre n'est pas complémentée et est connectée à la sortie du premier comparateur 62 ayant le seuil $P_2$,

— d'une porte logique 102 de type "et" à quatre entrées dont deux sont complémentées et connectées respectivement à la sortie du deuxième comparateur 72 ayant le seuil $N_2$ et à la sortie du circuit bistable 9, et dont deux ne sont pas complémentées et sont connectées respectivement à la sortie du premier comparateur 61 ayant le seuil $P_1$ et à la sortie du deuxième comparateur 71 ayant le seuil $N_1$

— et d'une porte logique 103 de type "ou" à trois entrées la première étant connectée à la sortie du premier comparateur 63 ayant le seuil $P_3$, la deuxième à la sortie de la porte logique 101 et la troisième à la sortie de la porte logique 102.

La sortie du circuit sélecteur 10 est connectée à un générateur de délai 11 qui se déclenche pour une durée TM dite "temps de maintien" dès que le signal de sortie s du circuit sélecteur 10 passe à l'état logique 0 correspondant à la détection d'absence de parole après être resté constamment, pendant une durée au moins égale à une durée TAM dite "temps d'activité préalable" à l'état 1 correspondant à la détection de présence de parole. Les temps d'activité préalable TAM et les temps de maintien TM peuvent prendre deux valeurs distinctes TAM1, TAM2 respectivement TM1, TM2 choisies en fonction de l'état logique du signal de sortie $p'_4$ du circuit bistable 9. Dans le cas d'un niveau fort de parole pour lequel la sortie du circuit bistable 9 est à l'état 1 le temps d'activité préalable TAM1 est pris égal à 24 millisecondes soit 6 T et le temps de maintien TM1 à 80 millisecondes soit 20 T. Dans le cas d'un niveau faible de parole pour lequel la sortie du circuit bistable 9 est à l'état 0 le temps d'activité préalable TAM 2 est pris égal à 8 millisecondes soit 2 T et le temps de maintien TM2 à 256 millisecondes soit 64 T.

Le générateur de délai 11 peut comporter, comme représenté à la figure 3, essentiellement un premier ensemble comprenant un compteur 111 suivi d'un comparateur 112 avec deux premières valeurs possibles de seuil et une mémoire 114 à deux emplacements pour le stockage de ces deux premières valeurs de seuil, et un second ensemble comprenant un compteur 116 suivi d'un comparateur 117 avec deux secondes valeurs possibles de seuil, et une mémoire 118 à deux emplacements pour le stockage de ces deux secondes valeurs de seuil.

Le compteur 111 comporte une entrée d'horloge CP sur laquelle il reçoit un signal rectangulaire de période T, une entrée d'autorisation de comptage CE connectée à la sortie d'une porte logique 110 de type "et" ayant une entrée complémentée connectée à la sortie du comparateur 112 et une entrée non complémentée connectée à la sortie du circuit sélecteur 10, une entrée de remise à zéro MR connectée à la sortie d'une porte logique 113 de type "et" ayant une entrée complémentée connectée à la sortie du circuit sélecteur 10 et une entrée non complémentée connectée à la sortie du comparateur 117, et une sortie parallèle Q.

Le comparateur 112 comporte deux entrées parallèles, l'une reliée à la sortie Q du compteur 111 l'autre à la sortie de la mémoire 114 à deux emplacements dont l'adressage est commandé par le signal de sortie $p'_4$ du circuit bistable 9 et qui renferme sous forme binaire le chiffre 5 correspondant à TAM1 moins un intervalle de temps T et le chiffre 1 correspondant à TAM2 moins un intervalle de temps T. La sortie de ce comparateur 112 est, comme celles des précédents, à l'état logique 1 lorsque son seuil est dépassé et à l'état logique 0 dans le cas contraire.

Un état logique 1 à la sortie du circuit sélecteur 10 traduisant la présence de parole dans la séquence de signal analysé autorise le comptage du compteur 111 tant que le contenu de celui-ci ne dépasse pas le seuil du comparateur 112. Si un état logique 1 se maintient en sortie du circuit sélecteur 10 pendant un nombre d'intervalles de temps T successifs suffisant pour que le contenu du compteur 111 dépasse le seuil du comparateur 112 un état logique 1 apparait en sortie de ce dernier et entraîne le blocage du compteur 111. Un état logique 0 à la sortie du circuit sélecteur 10 bloque le compteur 111 et entraîne sous certaine condition précisée plus loin sa remise à zéro.

Le compteur 116 comporte une entrée d'horloge CP sur laquelle il reçoit un signal rectangulaire de période T, une entrée d'autorisation de comptage CE connectée à la sortie d'une porte logique 115 de type "ni", à deux entrées connectées l'une à la sortie du circuit sélecteur 10 et l'autre à la sortie du comparateur 117, une entrée de remise à zéro MR connectée à la sortie d'une porte logique 119 de type "et" à deux entrées connectées l'une à la sortie du circuit sélecteur 10 et l'autre à la sortie du comparateur 112 et une sortie parallèle Q.

Le comparateur 117 comporte deux entrées parallèles l'une reliée à la sortie Q du compteur 116 l'autre à la sortie de la mémoire 118 à deux emplacements dont l'adressage est commandé par le signal de sortie $p'_4$ du circuit bistable 9 et qui renferme sous forme binaire, le chiffre 19 correspondant à TM1 moins un intervalle de temps T et le chiffre 63 correspondant à TM2 moins un intervalle de temps T. La sortie de ce comparateur 117 est, comme celle des précédents, à l'état logique 1 lorsque son seuil est dépassé et à l'état logique 0 dans le cas contraire; elle est connectée à l'entrée d'un inverseur, non référencé, dont la sortie constitue celle du générateur de délai 11.

Un état logique 0 à la sortie du circuit sélecteur 10 traduisant l'absence de parole dans la séquence de signal analysé autorise le comptage du compteur 116 tant que le contenu de celui-ci ne dépasse pas le seuil du comparateur 117. Si un état logique 0 se maintient en sortie du circuit sélecteur 10 pendant un nombre d'intervalles de temps T successifs suffisant pour que le contenu du compteur 116 dépasse le seuil du comparateur 117, un état logique 1 apparaît en sortie de ce dernier et entraîne le blocage du compteur 116. Un état logique 1 à la sortie du circuit sélecteur 10 bloque le compteur 116 et provoque, si et seulement si la sortie du comparateur 112 est à l'état logique 1, la remise à zéro de ce compteur 116.

On notera qu'un état logique 0 à la sortie du circuit sélecteur 10 n'entraîne la remise à zéro du compteur 111 qui si la sortie du comparateur 117 est à l'état logique 1 c'est-à-dire, ainsi qu'il apparaîtra plus clairement ci-après, qui si cet état logique 0 se maintient à la sortie du circuit sélecteur 10 depuis une durée au moins égale au temps de maintien TM.

Le compteur 111 étant initialement à zéro et le compteur 116 bloqué à une valeur supérieure au seuil du comparateur 117, un état logique 1 apparaissant à la sortie du circuit sélecteur 10 autorise le comptage du compteur 111 et laisse bloqué le compteur 116.

Si cet état logique 1 se maintient à la sortie du circuit sélecteur 10 pendant un nombre d'intervalles de temps T successifs suffisant pour que le contenu du compteur 111 atteigne une valeur égale au seuil du comparateur 112 augmenté d'une unité, le compteur 111 se bloque alors à cette valeur; la sortie du comparateur 112, en passant à l'état logique 1, provoque la remise à zéro du compteur 116 qui demeure ensuite à zéro tant que l'état logique 1 se maintient à la sortie du circuit sélecteur 10. Lorsque cet état disparaît, après donc une durée de détection de présence de parole sans interruption supérieure ou égale au temps d'activité préalable TAM, le compteur 116 commence à compter, c'est-à-dire que le générateur de délai 11, dont la sortie initialement à l'état logique 0 est passée à l'état logique 1 Lors de la remise à zéro de ce compteur 116, se déclenche, tandis que le compteur 111 reste bloqué. Si l'état logique 0 se maintient ensuite à la sortie du circuit sélecteur 10 pendant un nombre d'intervalles de temps T successifs suffisant pour que le contenu du compteur 116 atteigne une valeur égale au seuil du comparateur 117 augmenté d'une unité, le compteur 116 se bloque alors à cette valeur, c'est-à-dire que le générateur de délai 11 cesse d'être déclenché; la sortie du générateur repasse à l'état logique 0 et le compteur 111 est remis à zéro où il reste alors bloqué et l'on retrouve l'état initial. Si par contre un état logique 1 apparaît à la sortie du circuit sélecteur 10 alors que le contenu du compteur 116 ne dépasse pas le seuil du comparateur 117, c'est-à-dire si l'absence de parole a été détectée pendant une durée inférieure au temps de maintien TM, le compteur 116 est remis alors à zéro où il demeure ensuite bloqué, le générateur de délai 11 cessant donc d'être déclenché, la sortie du générateur reste à l'état logique 1 et le compteur 111 bloqué à la valeur égale au seuil du comparateur 112 augmenté d'une unité; la réapparition d'un état logique 0 sur la sortie du circuit sélecteur 10, quelqu'ait été la durée pendant laquelle l'état logique 1 s'est maintenu sur la sortie de ce circuit c'est-à-dire pendant laquelle la présence de parole a été détectée, autorise à nouveau le comptage du compteur 116 (qui recompte à partir de zéro) c'est-à-dire provoque à nouveau le déclenchement du générateur de délai 11 dont la sortie demeure à l'état logique 1, tandis que le compteur 111 demeure bloqué.

Si par contre l'état logique 1 disparaît à la sortie du circuit sélecteur 10 alors que le contenu du compteur 111 ne dépasse pas le seuil du comparateur 112, c'est-à-dire si la présence de parole a été détectée pendant une durée inférieure au temps d'activité préalable TAM, le compteur 111 est alors remis à zéro tandis que le compteur 116 reste bloqué, ce qui restitue l'état initial. Le générateur de délai 11 n'est pas déclenché et sa sortie, initialement à l'état logique 0, se maintient dans cet état.

On notera qu'ici lorsque le générateur de délai 11 est déclenché, c'est-à-dire lorsque le compteur 116 est en comptage, la sortie du générateur de délai est toujours à l'état logique 1, et lorsque le générateur de délai 11 n'est pas déclenché, c'est-à-dire lorsque le compteur 116 est bloqué, la sortie du générateur de délai est soit à l'état logique 0 (compteur 116 bloqué à une valeur égale au seuil du comparateur 117 augmenté d'une unité) soit à l'état logique 1 (compteur 116 bloqué à zéro). On ne peut avoir simultanément le générateur de délai 11 non déclenché et la sortie de celui-ci à l'état logique 1 que lorsque la sortie du circuit sélecteur 10 est elle-même à l'état logique 1.

On remarquera que, selon cet exemple de réalisation du générateur de délai 11, lorsque le passage de la sortie du circuit sélecteur 10 de l'état logique 0 à l'état logique 1 se produit alors que le compteur 116 est en cours de comptage, la phase de comptage en cours de ce compteur est interrompue c'est-à-dire que le déclenchement du générateur de décali 11 est inhibé. Lorsque la sortie du circuit sélecteur 10 repasse ensuite à l'état logique 0, le compteur 116 repart alors de zéro pour une nouvelle phase de comptage, c'est-à-dire que le générateur de délai 11 est à nouveau déclenché pour la durée du temps de maintien TAM, quelle que soit la durée pendant laquelle la sortie du circuit sélecteur est restée à l'état logique 1; en variante, le compteur 116 pourrait ne repartir alors de zéro pour une nouvelle phase de comptage que lorsque la durée pendant laquelle la sortie du circuit sélecteur est restée à l'état logique 1 est au moins égale au temps d'activité préalable TAM et reprendre la phase de comptage interrompue 1à où elle a été interrompue dans le cas contraire; il suffirait pour cela de connecter l'entrée de remise à zéro MR du compteur 111 à la sortie du circuit sélecteur 10 à travers un simple inverseur, la porte 113 étant supprimée.

En revenant à la figure 1 on voit que la sortie 12 du détecteur de parole est couplée à celle du circuit sélecteur 10 par l'intermédiaire d'une porte logique 13 de type "ou" constituant un circuit de maintien commandé par le générateur de délai 11. Cette porte logique 13 de type "ou" a deux entrées connectées l'une à la sortie du circuit sélecteur 10 et l'autre à la sortie du générateur de délai 11. Elle permet de porter la sortie du détecteur de parole à l'état logique 1 indicatif de présence de parole dès que la sortie du circuit sélecteur 10 est à l'état logique 1 indiquant la présence de parole dans la séquence analysée de quatre millisecondes ou que la sortie du générateur de délai 11 est à l'état logique 1 indiquant, lorsque la sortie du circuit sélecteur 10 n'est pas à l'état logique 1, que le générateur est déclenché.

Le détecteur de parole dont la structure vient d'être décrite procède à l'analyse du signal par séquences consécutives de quatre millisecondes dont il détermine la puissance moyenne et le nombre de passages par zéro pour les comparer à des seuils et en déduire si l'on est en présence de parole ou de bruit.

Dans le cas où les puissances moyennes des séquences du signal analysées préalablement n'ont pas dépassé le seuil $P_4$ de —14 dBmO et où certaines d'entre elles dont huit au moins successives ont été inférieures au seuil $P_5$ de —47 dBmO, c'est-à-dire dans le cas d'un faible niveau de parole, une séquence de quatre millisecondes est considérée comme renfermant des indices de parole si l'une des conditions suivantes est respectée:

— sa puissance moyenne est supérieure à un seuil $P_3$ de —40 dBmO,
— sa puissance moyenne est comprise entre un seuil $P_3$ de —40 dBmO et un seuil $P_2$ de —43 dBmO alors que son nombre de passages par zéro est inférieur ou égal à 10,
— sa puissance moyenne est comprise entre un seuil $P_2$ de —43 dBmO et un seuil $P_1$ de —56 dBmO alors que son nombre de passages par zéro est de cinq ou six.

Si dexu séquences de quatre millisecondes consécutives renferment des indices de parole (temps d'activité préalable TAM2) les 64 séquences suivantes (temps de maintien TM2) sont considérées comme de la parole qu'elles renferment ou non des indices de paroles.

Dans le cas où les puissances moyennes des séquences du signal analysées préalablement ont dépassé au moins une fois le seuil $P_4$ de —14 dBmO sans qu'ultérieurement huit d'entre elles consécutives n'aient été inférieures au seuil $P_5$ de —47 dBmO, c'est-à-dire dans le cas d'un fort niveau de parole, une séquence de quatre millisecondes est considérée comme renfermant des indices de parole si l'une des conditions suivantes est respectée.

— sa puissance moyenne est supérieure au seuil $P_3$ de —40 dBmO
— sa puissance moyenne est comprise entre un seuil $P_3$ de —40 dBmO et un seuil $P_2$ de —43 dBmO alors que son nombre de passages par zéro est inférieur ou égal à 10.

Si six séquences de quatre millisecondes consécutives renferment des indices de parole (temps d'activité préalable TAM1) les 20 séquences suivantes (temps de maintien TM1) sont considérées comme de la parole qu'elles renferment ou non des indices de parole.

Le procédé mis en oeuvre pour différencier la parole du silence dans le détecteur de parole précédent consiste à considérer comme de la parole toute séquence de signal à analyser présentant une puissance moyenne supérieure à un seuil dont la valeur est choisie d'autant plus faible que le nombre de passages par zéro de ladite séquence se rapproche de 1,25 par milliseconde. Le fait d'abaisser le niveau du seuil de puissance adopté pour faire la distinction entre la parole et le bruit, lorsque le nombre de passage par zéro se rapproche de 1,25 par milliseconde c'est-à-dire en fait lorsque la fréquence de la composante fondamentale du signal analysé se rapproche de 625 Hz ne devrait pas permettre de détecter les consonnes fricatives ou sibilantes qui, selon l'idée communément admise, ne comportent que des fréquences élevées comprises entre 1,5 et 4 kHz et par conséquent des passages par zéro compris entre 3 et 8 par milliseconde. Pourtant la pratique démontre le contraire et le procédé se révèle particulièrement efficace.

Cela semble être du au fait que l'étude des consonnes sibilantes ou fricatives faite jusqu'alors repose sur l'hypothèse que le signal acoustique correspondant peut être assimilé à un processus aléatoire stationnaire et ergodique ce qui n'est vrai que dans la mesure où la séquence de signal analysée est correctement choisie et où celui-ci présente un certain niveau. L'analyse des phonèmes prononcés à bas niveau et formés de consonnes fricatives ou sibilantes montre qu'il existe un résidu de composantes basse fréquence dans la bande 550 Hz—750 Hz, que l'hypothèse de stationnarité n'est pas justifiée pour la durée du phonème de l'ordre de 250 millisecondes, les rapports entre les composantes des différentes fréquences variant pour une séquence en fonction de sa position dans le phonème et qu'il existe une probabilité très élevée pour que les composantes basse fréquence dans la bande 550 Hz—750 Hz soient prépondérantes sur une séquence de l'ordre d'une dizaine de millisecondes en début de phonème. La détection de cette dernière séquence par son nombre de passage par zéro associé à un temps de maintien de l'ordre de la durée du phonème (250 ms) permet alors da détection de la majeure partie du phonème.

L'intérêt de la seule utilisation des composantes de la bande 550 Hz—750 Hz pour ajuster le seuil de puissance adopté pour différencier la parole du silence, à l'exclusion des composantes haute fréquence, provient du fait que c'est dans la bande de fréquence 550 Hz—750 Hz où se trouve le maximum du spectre de puissance d'un signal de parole pris sur une longue période, que l'on a le meilleur rapport signal sur bruit.

## Revendications

1/ Procédé de détection de parole dans un signal de circuit téléphonique caractérisé en ce que l'on considère comme de la parole toute séquence dudit signal présentant une puissance moyenne supérieure à un seuil dont la valeur est choisie d'autant plus faible que le nombre de passages par zéro de ladite séquence sa rapproche de 1,25 par milliseconde.

2/ Procédé selon la revendication 1, caractérisé en ce que le signal est partagé en séquences successives de quatre millisecondes

15  **0 043 056**  16

et en ce que le seuil peut prendre trois valeurs discrètes, la plus faible correspondant à un nombre de passages par zéro de cinq ou six, la valeur intermédiaire correspondant à un nombre de passages par zéro inférieur ou égal à quatre ou compris entre sept et dix et la plus forte correspondant à un nombre de passages par zéro supérieur à dix.

3/ Procédé selon la revendication 1, caractérisé en ce que le seuil peut prendre trois valeurs discrètes, la valeur la plus faible correspondant à un nombre de passages par zéro compris entre 1 et 1,5 par milliseconde, la valeur intermédiaire correspondant à un nombre de passages par zéro inférieur à 1 par milliseconde ou compris entre 1,5 et 2,5 par milliseconde et la valeur la plus forte correspondant à un nombre de passages par zéro supérieur à 2,5 par milliseconde.

4/ Procédé selon la revendication 3, caractérisé en ce que la valeur la plus faible du seuil est éliminée et la valeur intermédiaire étendue au nombre de passages par zéro inférieur à 2,5 par milliseconde lorsque la séquence de signal analysée a été précédée d'une séquence dont la puissance moyenne a dépassé un niveau dit "de forte parole" très supérieur aux valeurs discrètes du seuil sans que ultérieurement les puissances moyennes de plusieurs séquences consécutives n'aient été inférieures à un niveau dit "de faible parole" choisi entre la valeur inférieure et la valeur intermédiaire du seuil.

5/ Procédé selon la revendication 4, dans lequel, après une détection de parole pendant plusieurs séquences consécutives s'étendant sur une durée au moins égale à un temps dit "temps d'activité préalable" il est prévu un temps dit "temps de maintien" pendant lequel les séquences du signal sont considérées comme de la parole, caractérisé en ce que les durées des temps de maintien et d'activité préalable peuvent prendre chacune deux valeurs l'une dite inférieure et l'autre dite supérieure, et en ce que le temps d'activité préalable a sa valeur inférieur et le temps de maintien sa valeur supérieure sauf lorsque la valeur la plus faible du seuil est éliminée, cas où le temps d'activité préalable a sa valeur supérieure et le temps de maintien sa valeur inférieure.

6/ Détecteur de parole mettant en oeuvre le procédé selon la revendication 1 recevant en entrée, à intervalle régulier $\tau$ des échantillons numériques avec bit de signe d'un signal à analyser, caractérisé en ce qu'il comporte:

— un circuit d'élévation au carrié (2) connecté à l'entrée (1) du détecteur de parole,
— un premier accumulateur numérique (3) connecté à la sortie du circuit d'élévation au carré (2) et remis à zéro tous les L échantillons, (L étant un entier positif),
— un circuit (4) de détection des variations du bit de signe des échantillons appliqués à l'entrée (1) du détecteur de parole,
— un deuxième accumulateur numérique (5) connecté à la sortie du circuit (4) de détection des variations du bit de signe et remis à zéro tous les L échantillons,
— un banc (6) de premiers comparateurs à seuils (61, 62, 63) avec des valeurs de seuils ($P_1$, $P_2$, $P_3$) étagées, connectés, en entrée, à la sortie du premier accumulateur numérique, lesdits premiers comparateurs à seuils délivrant chacun en sortie un signal binaire dont l'état indique si le signal de sortie du premier accumulateur numérique (3) est supérieur ou non à son seuil,
— un banc (7) de deuxième comparateur à seuils (71, 72, 73), avec des velaurs de seuils ($N_1$, $N_2$, $N_3$) étagées bornant des plages contiguës dont l'une renferme la valeur 1,25 L$\tau$, $\tau$ étant exprimé en milliseconde, lesdits deuxièmes comparateurs à seuils étant connectés, en entrée, à la sortie du deuxième accumulateur numérique (5) et délivrant en sortie des signaux binaires dont les états sont représentatifs de la plage dans laquelle se trouve le signal de sortie du deuxième accumulateur numérique (5)
— et un circuit sélecteur (10) connecté, en entrée, aux sorties des premiers et deuxièmes comparateurs à seuils (61, 62, 63, 71, 72, 73), ledit circuit sélecteur assurant le choix de la sortie de l'un des premiers comparateurs à seuils en fonction des états des sorties des deuxièmes comparateurs à seuils, cela de manière que le seuil du premier comparateur sélectionné soit d'autant plus petit que la plage dans laquelle se trouve le signal de sortie du deuxième accumulateur numérique (5) est plus proche de celle contenant la valeur 1,25 L$\tau$, l'état de sortie du premier comparateur à seuil sélectionné correspondant à un signal de sortie du premier accumulateur numérique (3) supérieur à son seuil étant considéré comme indicatif de parole et l'état complémentaire comme indicatif de silence.

7/ Détecteur de parole selon la revendication 6, caractérisé en ce qu'il comporte en outre:

— un générateur de délai (11) connecté à la sortie du circuit sélecteur (10), ledit générateur de délai se déclenchant pour une durée de temps de maintien dès que le signal de sortie du circuit sélecteur (10) passe à l'état correspondant à l'absence de parole après être resté constamment pendant une durée au moins égale à une durée de temps d'activité préalable à l'état correspondant à la présence de parole
— et un circuit de maintien (13) commandé par le générateur de délai (11) et connecté en sortie du circuit sélecteur (10), ledit circuit de maintien délivrant le signal de sortie du détecteur de parole avec un état correspondant à la présence de parole ou à l'état du signal de sortie du circuit sélecteur (10) selon que le générateur de délai est déclenché ou non.

8/ Détecteur de parole selon la revendication 6, caractérisé en ce qu'il comporte en outre:

— un banc (8) de troisièmes comparateurs à seuils (84, 85) au nombre de deux l'un (84) ayant une valeur de seuil (P_4) très supérieure aux valeurs des seuils des premiers comparateurs à seuils (61, 62, 63), l'autre (85) ayant une valeur de seuil (P_5) comprise entre la valeur la plus faible et celle qui lui est immédiatement supérieure des seuils des premiers comparateurs à seuils (61, 62, 63),
— un circuit bistable (9) connecté aux sorties des deux troisièmes comparateurs à seuils, ledit circuit bistable étant amené dans un état indicatif d'un niveau fort de parole sur commande du troisième comparateur (84) ayant le seuil (P_4) le plus élevé, et dans l'état complémentaire indicatif d'un niveau faible de parole sur commande de l'autre troisième comparateur (85)
— et un circuit de blocage incorporé au circuit sélecteur (10) et commandé par le circuit bistable (9), empêchant la sélection du premier comparateur à seuil (61) ayant le seuil le plus faible (P_1) dans le cas d'un niveau fort de parole.

9/ Détecteur de parole selon la revendication 7, caractérisé en ce que le générateur de délai (11) présente deux valeurs de temps d'activité préalable et deux valeurs de temps de maintien, le choix entre l'une ou l'autre des deux valeurs étant commandé par le circuit bistable (9).

## Patentansprüche

1. Verfahren zum Erkennen der Sprache in einem Signal eines Telefonkreises, dadurch gekennzeichnet, daß als Sprache jede Signalsequenz betrachtet wird, die eine mittlere Leistung oberhalb eines Schwellwerts besitzt, wobei dieser Schwellwert umso niedriger angesetzt wird, als sich die Anzahl der Nulldurchgänge der Folge dem Wert 1,25 pro Millisekunde annähert.

2. Verfahren nach Anspruch 1, dadurch gekennzeichnet, daß das Signal in aufeinanderfolgende Sequenzen von je 4 ms aufgeteilt ist und daß die Schwelle einen von drei diskreten Werten annimmt, von denen der niedrigste fünf oder sechs Nulldurchgängen entspricht, der mittlere gilt, wenn höchstens vier oder zwischen sieben und zehn Nulldurchgänge vorliegen, und der größte Wert bei mehr als zehn Nulldurchgängen gilt.

3. Verfahren nach Anspruch 1, dadurch gekennzeichnet, daß die Schwelle einen von drei diskreten Werten annimmt, von denen der niedrigste bei 1 bis 1,5 Nulldurchgängen pro Millisekunde, der mittlere bei weniger als einem Nulldurchgang pro Millisekunde oder bei 1,5 bis 2,5 Nulldurchgängen pro Millisekunde und der größte Wert bei mehr als 2,5 Nulldurchgängen pro Millisekunde gilt.

4. Verfahren nach Anspruch 3, dadurch gekennzeichnet, daß der niedrigste Schwellwert eliminiert und der mittlere Wert auf weniger als 2,5 Nulldurchgänge pro Millisekunde ausgedehnt wird, wenn der analysierten Signalsequenz eine Sequenz vorausgegangen ist, deren mittlere Leistung einen "lauten", sehr weit oberhalb der diskreten Schwellwerte liegenden Sprachpegel überschritten hat, ohne daß später die mittleren Leistungen mehrerer aufeinanderfolgender Sequenzen unterhalb eines "leisen" Sprachpegels gewesen wären, der zwischen dem unteren und dem mittleren Schwellwert liegt.

5. Verfahren nach Anspruch 4, bei dem nach dem Erkennen von Sprache über mehrere aufeinanderfolgende Sequenzen hinweg, die sich über eine Dauer erstrecken, die gleich einer "Vor-Aktivitätszeit" genannten Zeit ist, eine "Haltezeit" genannte Zeit vorgesehen ist, während der die Signalsequenzen als Sprache betrachtet werden, dadurch gekennzeichnet, daß die Längen der Vor-Aktivitäts-und der Haltezeit je zwei Werte annehmen können, einen unteren und einen oberen Wert, und daß die Vor-Aktivitäts-zeit normalerweise ihren unteren und die Haltezeit ihren oberen Wert annimmt, außer wenn der geringste Schwellwert eliminiert wird, wobei dann die Vor-Aktivitätszeit den höhren und die Haltezeit den geringeren Wert annimmt.

6. Sprachdetektor, der gemäß dem Verfahren nach Anspruch 1 arbeitet und eingangsseitig in regelmäßigen Intervallen $\tau$ digitale Tastproben mit einem Vorzeichenbit eines zu analysierenden Signals zugeführt erhalt, dadurch gekennzeichnet, daß er enthält:

— einen Quadrierschaltkreis (2), der an den Eingang (1) des Sprachdetektors angeschlossen ist,
— einen ersten digitalen Akkumulator (3), der an den Ausgang des Quadrierkreises (2) angeschlossen ist und nach je L Tastproben auf Null gestellt wird (L ist eine positive ganze Zahl),
— einen Schaltkreis (4) zur Entdeckung der Vorzeichenbitwechsel der an den Eingang (1) des Sprachdetektors angelegten Tastproben,
— einen zweiten digitalen Akkumulator (5), der an den Ausgang des Schaltkreises (4) zur Entdeckung der Vorzeichenbitwechsel angeschlossen ist und nach je L Tastproben auf Null gesetzt wird,
— eine Bank (6) von ersten Schwellwertkomparatoren (61, 62, 63) mit gestuften Schwellwerten (P_1, P_2, P_3), die eingangsseitig an den ersten digitalen Akkumulator angeschlossen sind und ausgangsseitig je ein Binärsignal liefern, dessen Zustand angibt, ob das Ausgangssignal des ersten digitalen Akkumulators seinen Schwellwert übersteigt oder nicht,

— eine Bank (7) von zweiten Schwellwertkomparatoren (71, 72, 73) mit gestuften Schwellwerten $(N_1, N_2, N_3)$, die aneinander anschließende Bereiche begrenzen, von denen einer der Wert $1,25 \cdot L\tau$ einschließt, wobei $\tau$ in Millisekunden ausgedrückt ist und die zweiten Schwellwertkomparatoren eingangsseitig mit dem Ausgang des zweiten digitalen Akkumulators (5) verbunden sind und ausgangsseitig Binärsignale liefern, deren Zustände für den Bereich repräsentativ sind, in dem sich das Ausgangssignal des zweiten Akkumulators (5) befindet,

— und einen Auswahlschaltkreis (10), der eingangsseitig an die Ausgänge der ersten und zweiten Schwellwertkomparatoren (61, 62, 63, 71, 72, 73) angeschlossen ist und den Ausgang eines der ersten Schwellwertkomparatoren abhängig von den Ausgangszuständen der zweiten Schwellwertkomparatoren auswählt derart, daß die Schwelle des ausgewählten ersten Komparators umso niedriger ist, je näher der Bereich, in dem sich das Ausgangssignal des zweiten digitalen Akkumulators (5) befindet, dem Bereich kommt, der den Wert $1,25 \cdot L \cdot \tau$ enthält, wobei der Ausgangszustand des ausgewählten ersten Schwellwertkomparators, der einem oberhalb seiner Schwelle liegenden Ausgangssignal des ersten digitalen Akkumulators (3) entspricht, als Hinweis auf das Vorhandensein von Sprache genommen wird und der komplementäre Zustand als Hinweis auf die Abwesenheit von Sprache.

7. Sprachdetektor nach Anspruch 6, dadurch gekennzeichnet, daß er außerdem enthält:

— einen Verzögerungsschaltkreis (11), der an den Ausgang des Auswahlschaltkreises (10) angeschlossen ist und für eine Haltezeit ausgelöst wird, sobald das Ausgangssignal des Auswahlschaltkreises (10) auf den der Abwesenheit von Sprache entsprechenden Zustand übergeht, nachdem er deuernd während einer der Vor-Aktivitätszeit mindestens gleichen Zeitdauer auf dem Zustand verharrt war, der der Anwesenheit von Sprache entspricht,

— und einen Haltekreis (13), der vom Verzögerungskreis (11) gesteuert wird, an den Ausgang des Auswahlschaltkreises (10) angeschlossen ist und das Ausgangssignal des Sprachdetektors mit einem Zustand liefert, der der Anwesenheit von Sprache oder dem Zustand des Ausgangssignals des Auswahlschaltkreises (10) entspricht, je nachdem, ob der Verzögerungsschaltkreis ausgelöst ist oder nicht.

8. Sprachdetektor nach Anspruch 6, dadurch gekennzeichnet, daß er außerdem enthält:

— eine Bank (8) von zwei dritten Schwellwertkomparatoren (84, 85), von denen einer (84) einen deutlich oberhalb der Schwellen der ersten Schwellwertkomparatoren (61, 62, 63) liegenden Schwellwert $(P_4)$ besitzt, während der andere (85) einen Schwellwert $(P_5)$ besitzt, der zwischen dem niedrigsten und dem zweitniedrigsten Schwellwert der ersten Schwellwertkomparatoren (61, 62, 63) liegt,

— einen bistabilen Schaltkreis (9), der an der Ausgänge der zwei dritten Schwellwertkomparatoren angeschlossen ist und in einen einen lauten Sprachpegel anzeigenden Zustand unter Steuerung durch den dritten Komparator (84) mit dem höchsten Schwellwert $(P_4)$ gelangt, während er unter Steuerung durch den anderen dritten Komparator (85) in seinen komplementären Zustand gelangt, der einen leisen Sprachpegel anzeigt,

— und einen Blockierschaltkreis, der in den Auswahlschaltkreis (10) eingebaut ist, von bistabilen Schaltkreis (9) gesteuert wird und die Auswahl des ersten Schwellwertkomparators (61) mit der niedrigsten Schwelle $(P_1)$ im Fall eines lauten Sprachpegels verhindert.

9. Sprachdetektor nach Anspruch 7, dadurch gekennzeichnet, daß der Verzögerungsschaltkreis (11) zwei Werte der Vor-Aktivitätszeit und zwei Werte der Haltezeit besitzt und daß die Wahl das einen oder des anderen Werts vom bistabilen Schaltkreis (9) gesteuert wird.

**Claims**

1. A method of detecting the presence of speech in a telephone signal, characterized in that any signal sequence having a mean power level exceeding a threshold whose value is decreased as the number of passages through zero level in said sequence approaches 1,25 per millisecond, is interpreted as constituting speech.

2. A method according to claim 1, characterized in that the signal is divided into consecutive sequences of four milliseconds duration each, and that the threshold can have three discrete values, the lowest value corresponding to five or six passages through zero level, the intermediate value corresponding to up to four or between seven and ten passages through zero level and the highest value corresponding to more than ten passages through zero level.

3. A method according to claim 1, characterized in that the threshold can have three discrete values, the lowest value corresponding to between 1 and 1,5 passages through zero level per millisecond, the intermediate value corresponding to less than 1 or between 1,5 and 2,5 passages through zero level per millisecond and the highest value corresponding to more than 2,5 passages through zero level per millisecond.

4. A method according to claim 3, characterized in that the lowest value of said threshold is eliminated and the intermediate value is extended so as to correspond to up to 2,5 passages through zero level per millisecond when the signal sequence currently being analysed was preceded by a sequence for which the mean power level exceeded a predetermined "loud" speech level much higher than the aforementioned discrete threshold values, without the mean power levels of several consecutive sequences being lower than a "low voice" speech level chosen between said lower and intermediate threshold values.

5. A method according to claim 4, in which, when the presence of speech has been detected in a number of consecutive signal sequences with a cumulative duration at least equal to a predetermined "previous activity time", signal sequences are interpreted as constituting speech for a predetermined "holding time", characterized in that the previous activity and holding times can each have a higher and a lower value and that said previous activity time is maintained at its lower value and said holding time is maintained at its higher value except when said lowest threshold value is eliminated, in which case said previous activity time is fixed to its higher value and said holding time is fixed to its lower value.

6. A speech detector implementing the method according to claim 1, receiving at its input at regular intervals $\tau$ digital samples including a sign bit of a signal to be analyzed, characterized in that it comprises:

— a squaring circuit (2) which is connected to said speech detector input (1),
— a first digital accumulator (3) which is connected to the output of said squaring circuit (2) and which is reset to zero every L signal samples (where L is a positive integer),
— a circuit (4) for detecting variations in the value of the sign bit of signal samples applied to said speech detector input (1),
— a second digital accumulator (5) which is connected to the output of said sign bit value variation detector circuit (4) and which is reset to zero every L signal samples,
— a bank (6) of first threshold comparators (61, 62, 63) with staggered threshold values ($P_1$, $P_2$, $P_3$) and having respective inputs connected to the output of the first digital accumulator and respective outputs carrying respective binary signals indicating whether the output of said first digital accumulator (3) is above their respective thresholds or not,
— a bank (7) of second threshold comparators (71, 72, 73) with staggered threshold values ($N_1$, $N_2$, $N_3$) defining contiguous ranges of which one encompasses the value $1,25 \, L \cdot \tau$, where $\tau$ is expressed in milliseconds, said second threshold comparators having respective inputs connected to the output of said second digital accumulator (5) and respective outputs carrying respective binary signals representative of the range currently encompassing the output signal of said second digital accumulator (5), and
— a selector circuit (10) having inputs connected to the outputs of said first and second threshold comparators (61, 62, 63) and being responsive to the output states of said second threshold comparators by selecting the output of one of said first threshold comparators so that the threshold value of the selected first threshold comparator decreases with decreasing separation of the range encompassing the output signal of said second digital accumulator from the range encompassing the value $1,25L \cdot \tau$, the output state of the selected first threshold comparator which corresponds to an output signal from said first digital accumulator (3) exceeding its threshold value being considered to be indicative of the presence of speech and the complementary output state being considered to be indicative of the absence of speech.

7. A speech detector according to claim 6, characterized in that it further comprises:

— a time-delay generator (11) connected to the output of said selector circuit (10) and enabled for a period equal to said holding time in response to the output signal of said selector circuit (10) going to the condition indicative of the absence of speech after remaining for a period at least equal to a previous activity time in the condition indicative of the presence of speech, and
— a holding circuit (13) which is controlled by said time-delay generator (11) and connected to the output of said selector circuit (10) and which delivers the speech detector output signal, one state of which signifies the presence of speech or is equivalent to the output state of said selector circuit (10) according to whether said time-delay generator is enabled or not.

8. A speech detector according to claim 6, characterized in that it further comprises:

— a bank (8) of two third threshold comparators (84, 85), one of which (84) has a threshold value ($P_4$) much higher than those of said first threshold comparators (61, 62, 63) and the other of which (85) has a threshold value ($P_5$) between the lowest first threshold comparator (61, 62, 63) threshold value and the next higher first threshold comparator threshold value,
— a bistable circuit (9) which is connected to the outputs of said two third threshold comparators and which is switched to a state indicative of a predetermined loud speech level under the control of said third threshold comparator (84) with the higher threshold value ($P_4$), and to a complementary state indicative of a predetermined low voice speech level under the control of the other of said third threshold comparators (85), and
— a disabling circuit in said selector circuit (10) controlled by the bistable circuit (9) and preventing selection of the first threshold comparator (61) with the lowest threshold value ($P_1$) when said loud speech level is present.

9. A speech detector according to claim 7, characterized in that said time-delay generator (11) provides two values of said previous activity time and two values of said holding time, selection between said values being controlled by said bistable circuit (9).

# FIG.1

FIG.2

FIG.3

0 043 056

# FIG.4A

# FIG.4B